# EUROPÄISCHE PATENTSCHRIFT

(11) **EP 1 637 363 B1**
(45) Veröffentlichungstag und Bekanntmachung des Hinweises auf die Patenterteilung: **11.07.2007**
(21) Anmeldenummer: 05020400.7
(22) Anmeldetag: 19.09.2005
(51) Int. Cl.: B60D 1/54, B60D 1/06

(54) **Manueller Antrieb für eine Anhängerkupplung**
Manual drive for a trailer coupling
Dispositif d'entraînement manuel pour un attelage de remorque

(30) Priorität: 20.09.2004 DE 102004045859
(43) Veröffentlichungstag der Anmeldung: 22.03.2006
(73) Patentinhaber: Jaeger Cartronix GmbH, 61145 Friedberg (DE)
(72) Erfinder: Hachadorian, Gary, 63934 Röllbach (DE)
(74) Vertreter: KEIL & SCHAAFHAUSEN Patentanwälte

(56) Entgegenhaltungen:
- EP-A- 1 428 697
- EP-A- 1 544 003
- DE-A1- 10 243 044
- DE-U1-6202004 005 80
- US-A1- 2003 222 426
- US-B1- 6 447 000

## Beschreibung

Die Erfindung betrifft einen manuellen Antrieb für eine Anhängerkupplung, insbesondere für einen Personenkraftwagen, zur Verstellung der Anhängerkupplung zwischen einer Ruhestellung und einer Betriebsstellung mit einer Handbetätigung gemäß dem Oberbegriff des Anspruchs 1. Ferner betrifft die Erfindung einer Anhängerkupplung, die mit einem entsprechenden manuellen Antrieb ausgestattet ist.

An Fahrzeugen, insbesondere Personenkraftwagen, werden zunehmend Anhängerkupplungen installiert, die zwischen einer Betriebsstellung und einer Ruhestellung verschwenkbar sind, damit die Kugelstange hinter oder unter den Stoßfänger eingeklappt werden kann, wenn sie nicht gebraucht wird. Dazu muss die Kugelstange nach einer Entriegelung an dem Montageort von Hand aus der Ruhestellung in die Betriebsstellung oder umgekehrt bewegt werden. Dies ist umständlich, weil die Anhängerkupplungen unten an dem Fahrzeug montiert sind, so dass der Benutzer sich tief bis unter das Fahrzeug beugen muss, um die Entriegelung zu betätigen und an der Kugelstange der Anhängerkupplung anzugreifen. Auch weil die Anhängerkupplung nach dem Gebrauch häufig verschmutzt ist, ist eine derartige manuelle Betätigung sehr unkomfortabel.

Es sind ferner manuelle Antriebe mit Handbetätigungen bekannt, die in Form einer Handkurbel oder dgl. im Bedarfsfall auf eine Antriebswelle der Anhängerkupplung aufsteckbar sind. Häufig ist jedoch die Kupplung zum Aufstecken der Handkurbel derart verdreckt, dass die Kupplung vor dem Aufstecken gesäubert werden muss. Außerdem ist das Aufstecken der Handkurbel häufig schwierig, weil die Kupplung in richtiger Weise getroffen werden muss, um eine ausreichende Kraftübertragung zu erreichen. Ferner fallen solche aufsteckbaren, nicht fest mit der Antriebswelle verbundenen Handbetätigungen häufig während des Verstellvorgangs ab, so dass sie erneut angesetzt werden müssen.

Aus der US 2003/0222426 A1 ist eine fest am rückwärtigen Fahrzeugende montierte Betätigungseinheit nach dem Oberbegriff des Anspruchs 1 und des Anspruchs 12 bekannt, mit der die aus einer Kugelstange mit Kupplungskugel bestehende Anhängerkupplung in der Höhe, d.h. vertikal, verstellbar ist. Zur Betätigung ist ein drehbarer Handgriff vorgesehen.

In der US 6,447,000 B1 ist eine in der Ladefläche eines LKW versenkbare Anhängerkupplung beschrieben, die durch Ziehen an einem Hebel gehoben bzw. gesenkt wird.

Man geht zunehmend dazu über, die Anhängerkupplungen mittels elektromotorischer Antriebe und einer geeigneten Steuerung zu verstellen. Abgesehen von der damit verbundenen Verteuerung der Anhängerkupplungssysteme sind elektronische Bauteile für die Steuerung und den Antrieb störanfälliger als ein manuelles System. Außerdem müssen in der Steuerung ausreichende Sicherungsmaßnahmen ergriffen werden, um eine Fehlbedienung auszuschließen. Dies ist sehr aufwendig.

Aufgabe der Erfindung ist es daher, einen manuellen Antrieb für eine Anhängerkupplung vorzusehen, der einfach aufgebaut und komfortabel zu bedienen ist.

Diese Aufgabe wird bei einem manuellen Antrieb der eingangs genannten Art mit den Merkmalen des Anspruchs 1 im Wesentlichen dadurch gelöst, dass die Handbetätigung über ein Kraftübertragungsstück fest mit einer Antriebswelle der Anhängerkupplung verbindbar ist. Durch das Kraftübertragungsstück ist es möglich, die Handbetätigung an einer Stelle im Fahrzeug anzubringen, an welcher sie nicht stört, so dass die Handbetätigung dort fest installiert werden kann. Das Verstellen der Anhängerkupplung zwischen der Betriebsstellung und der Ruhestellung ist dann einfach durch eine Bedienung der Handbetätigung möglich, ohne dass diese separat gelagert und vor einer Bedienung aufgesteckt werden muss. Nach der Installation der Anhängerkupplung und des manuellen Antriebs ist die Handbetätigung über das Kraftübertragungsstück also fest mit der Antriebswelle der Anhängerkupplung verbunden, ohne dass vor der Betätigung eine weitere Installation vorgenommen werden muss. Ferner ist es möglich, die Handbetätigung an einer leicht bedienbaren Stelle anzuordnen, da die Kraft über das Kraftübertragungsstück leicht übertragen werden kann.

Erfindungsgemäß kann zwischen dem Kraftübertragungsstück und der Antriebswelle der Anhängerkupplung ein Getriebe vorgesehen sein, um den Verstellweg der Handbetätigung und der Antriebswelle der Anhängerkupplung aufeinander abzustimmen. Hierfür sind geringe Getriebeübersetzungen im Bereich zwischen etwa 1:1 und 1:5 ausreichend. Wenn dagegen durch das Getriebe auch die durch die Handbetätigung aufzubringende Kraft herabgesetzt werden soll, können auch höhere Getriebeübersetzungen verwendet werden, die der Fachmann entsprechend den Erfordernissen anpasst. Weil sich dadurch allerdings der benötigte Verstellweg der Handbetätigung verlängert, sind erfindungsgemäß Anhängerkupplungen zu bevorzugen, die nur einen geringeren Kraftaufwand benötigen. Derartige Anhängerkupplungen können erfindungsgemäß einen Kurvenantrieb für die Schwenk- und Rotationsbewegung aufweisen, der beispielhaft in der EP 1 400 379 A1 beschrieben ist.

Zur einfachen Bedienung weist die Handbetätigung einen an dem Kraftübertragungsstück angreifenden Hebel mit einer Zwangsführung auf, die nur bestimmte Bewegungsabläufe zulässtund eine Arretierung vorsieht, die nur in vorgegebenen Positionen des Hebels einrastbar ist, welche der Betriebs- und der Ruhestellung der Anhängerkupplung entsprechen. Um eine hohe Bediensicherheit zu erreichen, kann die Arretierung so ausgeführt sein, dass sie nur mit zwei Händen bedienbar ist.

Erfindungsgemäß kann der Hebel von dem Kraftübertragungsstück abklappbar sein, um über einen Hebelarm einfach die benötigte Kraft aufbringen zu können. Ggf. kann in dem Hebel ein zusätzliches Klappgelenk vorgesehen sein, das zusätzlich ein Hochklappen von einer Auflage und damit eine gute Handhabbarkeit ermöglicht.

Dann kann die Zwangsführung das Einklappen des Hebels erfindungsgemäß nur in vorgegebenen Positionen erlauben, die der Ruhestellung und Betriebsstellung der Anhängerkupplung entsprechen. Die Positionen des Hebels für die Ruhestellung und die Betriebsstellung können insbesondere dieselben sein, bspw. nach einer 360°-Drehung des Hebels. Dann kann die Zwangsführung als Schale ausgebildet sein, die in eine Blende des Kraftfahrzeugs integriert ist, welche insbesondere zwischen der Kofferraum-Rückwand des Kraftfahrzeugs und der Stoßfängerverkleidung angeordnet ist, um den Hebel aufzunehmen. Eine besonders geeignete Stelle ist der dem Kofferraumdeckel-Rand gegenüberliegende Bereich, der sich in der Regel über dem Montageort der Anhängerkupplung zwischen Rückwand des Kraftfahrzeugs und Stoßfänger befindet. Dort ist der Hebel gut zugänglich, ohne zu stören. Je nach Einbausituation ist es auch möglich, die Handbetätigung im Kofferraum, insbesondere an der Kofferraumrückwand, anzubringen und die Kraft über ein geeignetes Kraftübertragungsstück, bspw. eine feste oder flexible Welle und ein Kegelradgetriebe, zu übertragen.

Insbesondere bei dieser Anordnung kann das Kraftübertragungsstück als feste Welle ausgebildet sein, welche insbesondere in axialer Verlängerung der Antriebswelle der Anhängerkupplung oder einer dazu parallelen Achse angeordnet ist. Natürlich ist es auch möglich, die feste Welle über geeignete Gelenke schräg zu der Achsrichtung der Antriebswelle auszurichten. Dies ist jedoch mit mehr konstruktivem Aufwand verbunden und erfordert mehr Einbauraum. Falls bspw. wegen der Verriegelung der Kofferraumtür ein großer Versatz zwischen der Handbetätigung und der Antriebswelle der Anhängerkupplung notwendig ist, kann als Kraftübertragungsstück auch ein Ketten- oder Riemenantrieb vorgesehen werden. Bei ausreichend kurzen Kraftübertragungsstücken ist auch der Einsatz biegsamer Wellen möglich. Für längere, zu überbrückende Strecken bei der Kraftübertragung besteht bei biegsamen Wellen jedoch das Problem, dass diese eine zu große Eigentorsion aufweisen, bevor Kraft übertragen wird.

In einem solchen Fall bietet sich erfindungsgemäß eine Ausführungsform der Erfindung an, in der das Kraftübertragungsstück als flexibles Element ausgebildet ist. Hierfür ist insbesondere ein Seilzug geeignet.

Der Seilzug bzw. das flexible Element kann gemäß einer Ausführungsform an der Handbetätigung eine erste Trommel und an der Anhängerkupplung eine zweite Trommel aufweisen, zwischen denen ein Seil, insbesondere ein Stahlseil, gespannt ist. Bei Drehen der ersten Trommel durch die Handbetätigung wird die Drehbewegung über das Stahlseil auf die zweite Trommel übertragen, die dann die Antriebswelle der Anhängerkupplung antreibt.

Um eine Sychronisierung der Drehbewegungen zwischen der ersten und der zweiten Trommel zu erreichen, kann gemäß einer besonders vorteilhaften Ausführungsform dieser Erfindung vorgesehen werden, dass das Seil an der ersten Trommel festgelegt ist, durch eine Seilführung zu der zweiten Trommel verläuft und dort gehalten ist, und durch die Seilführung wieder zurück zu der ersten Trommel verläuft und dort eingespannt ist. Dadurch wird eine Drehung der ersten Trommel direkt auf die zweite Trommel übertragen, ohne dass die Gefahr eines Leerlaufs besteht. Dies ist besonders wichtig, um durch eine bestimmte Drehung der ersten Trommel eine definierte Drehung der zweiten Trommel zu erreichen, mit der die Anhängerkupplung zwischen einer Betriebsstellung und einer Ruhestellung verstellt wird. Eine derartige Synchronisation ist mit einer biegsamen Drehwelle nicht möglich, da eine flexible Drehwelle sich erst in sich verdrillt, bevor eine Kraft übertragen wird, so dass zwangsläufig ein Leerlauf entsteht.

Eine Übersetzung der Drehbewegung zwischen Handbetätigung und Antriebswelle kann erfindungsgemäß dadurch eingestellt werden, dass die erste Trommel und die zweite Trommel einen unterschiedlichen Durchmesser aufweisen.

Um eine für den Benutzer übersichtliche Handhabung zu erreichen, kann der manuelle Antrieb bspw. über das Getriebe oder die Trommeldurchmesser derart eingestellt werden, dass die Handbetätigung zwischen zwei Endstellungen um ganzzahlige Vielfache von 90°, insbesondere 180° oder 360°, verdrehbar ist. Dadurch werden definierte und leicht erkennbare Endstellungen der Handbetätigung festgelegt.

Die Erfindung betrifft auch eine Anhängerkupplung, die insbesondere mit einem vorbeschriebenen manuellen Antrieb ausgestattet ist und die zwischen einer Ruhestellung und einer Betriebsstellung mit einer Handbetätigung verstellbar ist. Dabei ist die Handbetätigung bei der fertig installierten Anhängerkupplung über ein Kraftübertragungsstück fest mit einer Antriebswelle der Anhängerkupplung verbunden und weist die weiteren Merkmale des Anspruchs 12 auf.

Weitere Vorteile, Merkmale und Anwendungsmöglichkeit der Erfindung ergeben sich auch aus der nachfolgenden Beschreibung von Ausführungsbeispielen und der Zeichnung.

Es zeigen:
- Fig. 1: einen manuellen Antrieb für eine Anhängerkupplung gemäß einer ersten Ausführungsform, wobei sich die Anhängerkupplung in der Ruhestellung befindet;
- Fig. 2: den manuellen Antrieb gemäß Fig. 1 mit einer in der Betriebstellung befindlichen Anhängerkupplung;
- Fig. 3: einen manuellen Antrieb für eine Anhängerkupplung gemäß einer zweiten Ausführungsform, wobei sich die Anhängerkupplung in der Ruhestellung befindet;
- Fig. 4: den manuellen Antrieb gemäß Fig. 3 mit einer in der Betriebstellung befindlichen Anhängerkupplung;
- Fig. 5: eine Explosionsdarstellung der Handbetätigung des manuellen Antriebs gemäß Fig. 3
- Fig. 6: eine Trommel der Handbetätigung des manuellen Antriebs gemäß Fig. 3 in einer Detail-Explosionsdarstellung und
- Fig. 7: eine Darstellung funktionswesentlicher Teile des manuellen Antriebs gemäß Fig. 3.

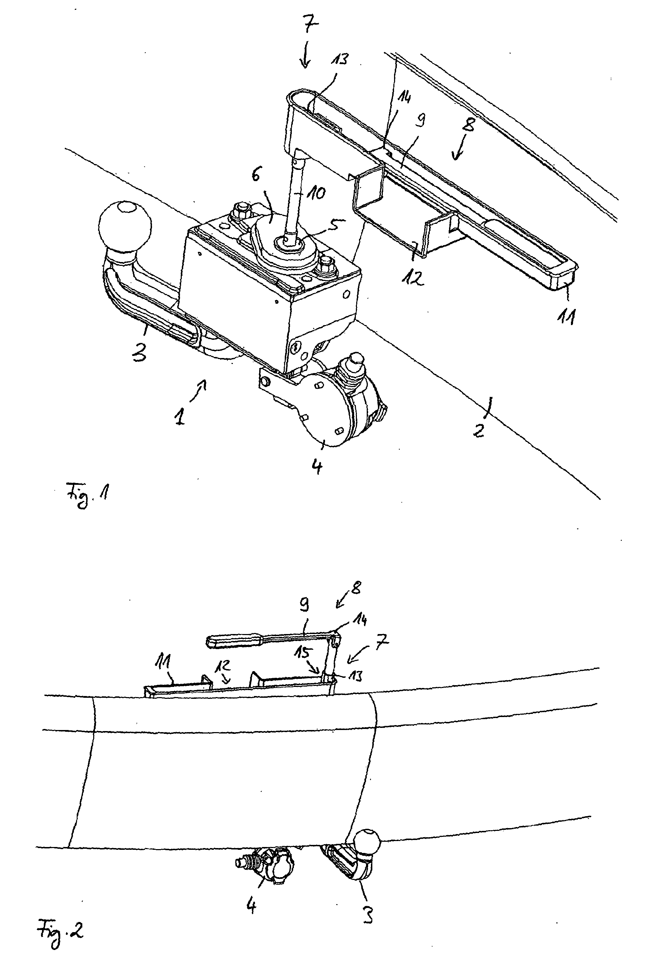

Fig. 1 zeigt eine eingebaute Anhängerkupplung 1 an einem PKW, wobei der Übersichtlichkeit halber die Rückwand des PKW und die Fahrzeugträger nicht dargestellt sind. Die Anhängerkupplung 1 befindet sich zwischen der nicht dargestellten Rückwand des PKW und dem Stoßfänger bzw. der Stoßfängerverkleidung 2. In der in Fig. 1 dargestellten Ruhestellung sind sowohl die Kugelstange 3 als auch die Steckdose 4 der Anhängerkupplung 1 hinter der Stoßfängerverkleidung 2 versteckt.

Zum Betätigen der Anhängerkupplung 1 ist an die Antriebswelle 5, die über ein Getriebe 6 aus dem Gehäuse der Anhängerkupplung 1 herausgeführt ist, ein manueller Antrieb 7 mit einer Handbetätigung 8 zum Verstellen der Anhängerkupplung 1 zwischen ihrer Ruhestellung und der in Fig. 2 dargestellten Betriebsstellung ausgebildet. Die Handbetätigung 8 weist einen klappbaren Hebel 9 auf und ist über ein als feste Welle ausgebildetes Kraftübertragungsstück 10 mit der Antriebswelle 5 fest verbunden, so dass die Handbetätigung 8 nach Aufklappen des klappbaren Hebels 9 ohne weitere Installationen sofort betätigt werden kann.

In der Ruhestellung ist der Hebel 9 in eine Schale 11 aufgenommen, die in eine nicht dargestellte Blende des PKW aufgenommen ist. Die Blende deckt den Freiraum zwischen der Stoßfängerverkleidung 2 und der PKW-Rückwand ab und befindet sich insbesondere im Bereich der Kofferraumöffnung, die durch den Kofferraumdeckel des PKW abgedeckt wird. Dadurch ist die Handbetätigung 8 so angeordnet, dass sie bei Nicht-Gebrauch nicht stört und einfach in eine Bedienstellung aufgeklappt werden kann. Dafür ist in der Schale 11 eine Handgriffmulde 12 ausgebildet, durch die der Hebel 9 einfach gegriffen werden kann.

Wie insbesondere Fig. 2 zu entnehmen, weist der Hebel 9 ein erstes Klappgelenk 13 und ein zweites Klappgelenk 14 auf. Das erste Klappgelenk 13 verbindet den Hebel 9 abklappbar mit der als Kraftübertragungsstück zu der Anhängerkupplung 1 dienenden festen Welle 10. Dies ermöglicht, den Hebel 9 aus der Schale 11 hochzuklappen, so dass er frei gedreht werden kann. Der untere, sich an das erste Klappgelenk 13 anschließende Abschnitt des Hebel 9 befindet sich in dieser Betätigungsposition in Verlängerung der festen Welle 10. Um die feste Welle 10 und damit die Antriebswelle 5 der Anhängerkupplung drehen zu können, wird der Hebel 9 noch an dem zweiten Klappgelenk 14 um etwa 90° abgeklappt, so dass ein etwa senkrecht zu der Achse der Wellen 5, 10 ausgerichteter Hebelarm gebildet wird. Dieser lässt sich einfach in Art einer Handkurbel drehen.

Dabei sind der manuelle Antrieb 7 und das Getriebe 6 so abgestimmt, dass durch eine Drehung des Hebels 9 um 360° um die Achsrichtung der Welle 10 die Anhängerkupplung 1 von der in Fig. 1 dargestellten Ruhestellung in die in Fig. 2 dargestellte Betriebsstellung geschwenkt wird. In Fig. 2 ist der aufgeklappte Hebel 9 wieder so angeordnet, dass er in die Schale 11 zurückgeklappt werden kann. Dabei bilden die Schale 11 und das Klappgelenk 13 eine Zwangsführung 15, die ein Einklappen des Hebels 9 nur in der Betriebs- oder der Ruhestellung der Anhängerkupplung 1 ermöglichen, um eine hohe Betriebssicherheit zu erreichen.

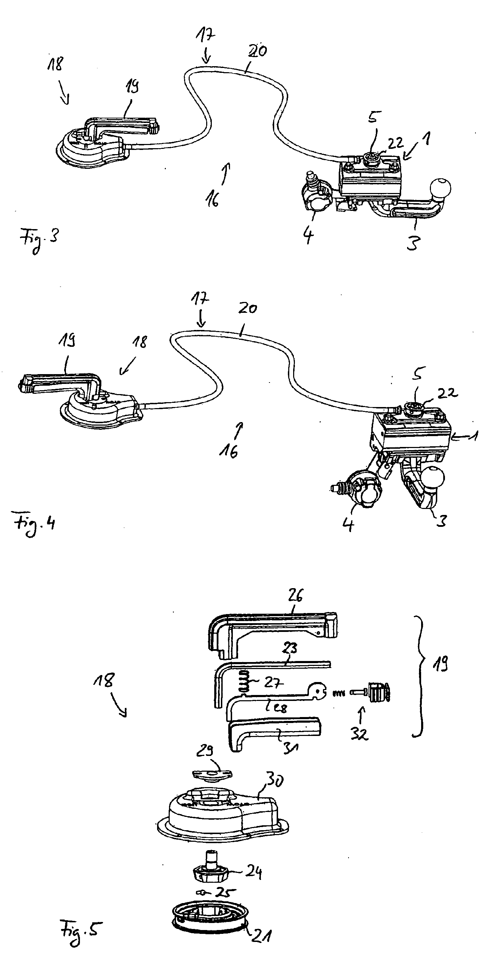

Die Fig. 3 bis 7 stellen eine zweite Ausführungsform der Erfindung dar, in der das Kraftübertragungsstück des manuellen Antriebs 16 als flexibles Element 17 in Form eines Seilzugs ausgebildet ist. Dazu ist eine Handbetätigung 18 über den Seilzug 17 mit der Antriebswelle 5 der Anhängerkupplung 1 verbunden, so dass durch eine Drehung eines Hebels 19 um 180° die Anhängerkupplung 1 zwischen der Ruhestellung und der Betriebsstellung bewegbar ist. Die beiden verschiedenen Positionen der Anhängerkupplung 1 und des Hebels 19 sind den Fig. 3 und 4 zu entnehmen.

Der Seilzug 17 wird durch ein nicht dargestelltes Stahlseil gebildet, welches in einer Seilführung 20 geführt wird. In der Handbetätigung 18 ist das Stahlseil, welches in der seitlichen Richtung flexibel, in der Längsrichtung aber starr ist, in einer ersten Trommel 21 (Fig. 5) festgelegt und verläuft durch die Seilführung 20 zu einer zweiten Trommel 22, welche an der Antriebswelle 5 der Anhängerkupplung 1 festgelegt ist. Dort ist das Stahlseil gehalten und verläuft durch die Seilführung 20 wieder zurück zu der ersten Trommel 21, in der es unter der gewünschten Spannung eingespannt ist. Auf diese Weise kann durch Betätigung des Hebels 19 eine Drehbewegung auf die Antriebswelle 5 der Anhängerkupplung 1 übertragen werden. Weil der Seilzug mit dem Stahlseil seitlich flexibel und in Richtung einer Längsausdehnung starr ist, behält es seine beim Einbau in das Fahrzeug festgelegte Vorspannung, so dass kein Leerlauf auftritt.

Dazu weist der Hebel 19, wie in Fig. 5 dargestellt, einen Hebelarm 23 auf, der mit einem Trommelantrieb 24 fest verbunden ist, in dem das Stahlseil mit einem Befestigungsende 25 festgelegt ist und der von der ersten Trommel 21 umgeben ist. Der Hebelarm 23 ist von einer Hebelummantelung 26 umgeben, die ebenso wie die Trommel 21 aus Kunststoff aufgebaut sein kann, weil die wesentlichen Kräfte von den insbesondere aus Metall bestehenden Hebelarm 23 und Trommelantrieb 24 aufgenommen werden.

In der Hebelummantelung 26 ist eine mit einer Feder 27 gegen den Hebelarm 23 vorgespannte, bügelförmige Arretierung 28 drehbar gelagert. Die Arretierung 28 greift in eine Arretierungsscheibe 29 ein, die in dem Gehäuse 30 der Handbetätigung 18 drehfest festgelegt ist und ein Arretieren nur in der Betriebs- und der Ruhestellung der Anhängerkupplung 1 erlaubt, zwischen denen der Hebel 19 um 180° zu verdrehen ist. Die Arretierung 28 wird durch eine Betätigung 31 gelöst, mit der die Arretierung 28 gegen die Kraft der Feder 27 gegen den Hebelarm 23 gedrückt werden kann, so dass die Arretierung 28 die Arretierungsscheibe 29 zur Drehung freigibt. Als zusätzliche Sicherheit gegen eine ungewollte Betätigung ist die Arretierung 28 durch eine zusätzliche, federvorbelastete Verriegelung 32 freizugeben, die vorzugsweise mit einer zweiten Hand zu betätigen ist.

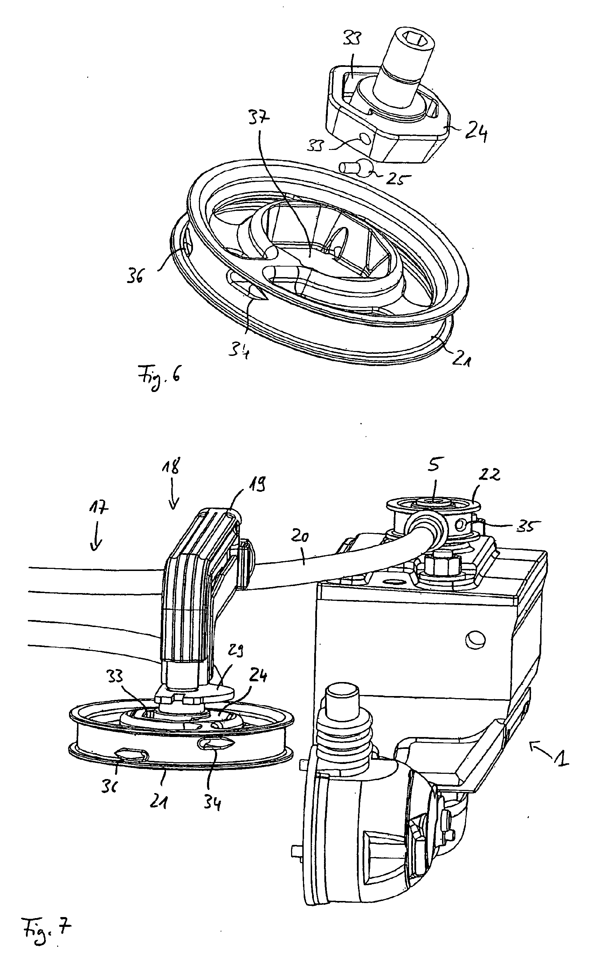

Mit Bezug auf Fig. 6 und 7 wird nachfolgend die Befestigung des Stahlseils in der ersten Trommel 21 und die Funktionsweise des Seilzugs 17 erläutert.

Das Stahlseil wird mit einem Befestigungsende 25 in eine in Fig. 6 nicht dargestellte, auf der Unterseite des Trommelantriebs 24 ausgebildete Öffnung derart eingefädelt, dass das Stahlseil durch die Führung 33 des Trommelantriebs 24 verläuft und durch das Befestigungsende 25 festgelegt ist. Das andere, freie Ende des Stahlseils wird durch die Öffnung 33 aus dem Trommelantrieb 24 herausgeführt und durch eine erste Durchgangsöffnung 34 der ersten Trommel 21 durchgefädelt und mit mindestens einer vollen Umdrehung um die erste Trommel 21 gewickelt. Anschließend wird es durch die Seilführung 20 zu der zweiten Trommel 22 geführt und an der auf der Antriebswelle 5 der Anhängerkupplung 1 montierten zweiten Trommel 22 gehalten. Dazu wird das Stahlseil durch eine zweite Durchgangsöffnung 35 der zweiten Trommel 22 gefädelt und in mindestens einer vollen Umdrehung um die zweite Trommel 22 geführt. Anschließend verläuft das Stahlseil durch die Seilführung 20 wieder zurück zu der ersten Trommel 21 und wird durch eine Befestigungsöffnung 36 in das Innere der ersten Trommel 21 geführt. Durch Einsetzen des Trommelantriebs 24 in das Innere der ersten Trommel 21 und das Festziehen bspw. mit einer Befestigungsschraube wird das Stahlseil zwischen einer Begrenzungswand 37 der ersten Trommel 21 und dem Trommelantrieb 24 fest eingespannt.

Durch die ersten und zweiten Durchgangsöffnungen 34, 35 wird erreicht, dass das Stahlseil bei einer Drehung der ersten Trommel 21 die Drehbewegung unmittelbar auf die zweite Trommel 22 überträgt, so dass eine Synchronisierung beider Trommeln 21, 22 gewährleistet ist. Die Durchgangsöffnungen 34, 35 dienen also als Synchronisierungsöffnungen für den manuellen Antrieb 16 mit Seilzug 17.

Das Übersetzungsverhältnis zwischen der Drehung des Hebels 19 und der Antriebswelle 5 der Anhängerkupplung 1, d.h. zwischen der treibenden, ersten Trommel 21 und der angetriebenen, zweiten Trommel 22, wird durch unterschiedliche Trommeldurchmesser erreicht.

Mit dem erfindungsgemäßen manuellen Antrieb 7, 16 wird eine einfache und sichere Handhabung der Verstellung einer Anhängerkupplung 1 zwischen einer Ruhestellung und einer Betriebsstellung dadurch erreicht, dass die Handbetätigung 8, 18 über ein geeignetes Kraftübertragungsstück 10, 17 fest mit der Antriebswelle 5 der Anhängerkupplung 1 verbunden ist, so dass für eine Betätigung keine weiteren Installationen notwendig sind.

### Bezugszeichenliste:

- 1: Anhängerkupplung
- 2: Stoßfängerverkleidung
- 3: Kugelstange
- 4: Steckdose
- 5: Antriebswelle
- 6: Getriebe
- 7: manueller Antrieb
- 8: Handbetätigung
- 9: klappbarer Hebel
- 10: Kraftübertragungsstück, feste Welle
- 11: Schale
- 12: Handgriffmulde
- 13: erstes Klappgelenk
- 14: zweites Klappgelenk
- 15: Zwangsführung
- 16: manueller Antrieb
- 17: Kraftübertragungsstück, flexibles Element, Seilzug
- 18: Handbetätigung
- 19: Hebel
- 20: Seilführung
- 21: erste Trommel
- 22: zweite Trommel
- 23: Hebelarm
- 24: Trommelantrieb
- 25: Befestigungsende
- 26: Hebelummantelung
- 27: Feder
- 28: Arretierung
- 29: Arretierungsscheibe
- 30: Gehäuse
- 31: Betätigung
- 32: federvorbelastete Verriegelung
- 33: Öffnung
- 34: erste Durchgangsöffnung
- 35: zweite Durchgangsöffnung
- 36: Befestigungsöffnung
- 37: Begrenzungswand

## Patentansprüche

1. Manueller Antrieb für eine Anhängerkupplung (1), insbesondere für einen Personenkraftwagen, zur Verstellung der Anhängerkupplung (1) zwischen einer Ruhestellung und einer Betriebsstellung mit einer Handbetätigung (8, 18), wobei die Handbetätigung (8 , 18) über ein Kraftübertragungsstück (10, 17) fest mit einer Antriebswelle (5) der Anhängerkupplung (1) verbindbar ist und einen an dem Kraftübertragungsstück (10, 17) angreifenden Hebel (9, 19) aufweist, **dadurch gekennzeichnet, dass** die Handbetätigung (8, 18) eine Zwangsführung (15, 28) aufweist, welche eine Arretierung vorsieht, die nur in vorgegebenen Positionen des Hebels (9, 19) einrastbar ist, welche die Betriebs- und Ruhestellung der Anhängerkupplung entsprechen.

2. Manueller Antrieb nach Anspruch 1, **dadurch gekennzeichnet, dass** zwischen dem Kraftübertragungsstück (10, 17) und der Antriebswelle (5) der Anhängerkupplung (1) ein Getriebe (6) vorgesehen ist.

3. Manueller Antrieb nach einem der vorhergehenden Ansprüche, **dadurch gekennzeichnet, dass** die Arretierung derart ausgeführt ist, dass sie nur mit zwei Händen bedienbar ist, indem sie eine zusätzlich Verriegelung (32) aufweist..

4. Manueller Antrieb nach einem der vorhergehenden Ansprüche, **dadurch gekennzeichnet, dass** der Hebel (9) von dem Kraftübertragungsstück (10) abklappbar ist und ggf. ein zusätzliches Klappgelenk (13, 14) aufweist.

5. Manueller Antrieb nach 4, **dadurch gekennzeichnet, dass** die Zwangsführung (15) das Einklappen des Hebels (9) nur in einer vorgegebenen Position ermöglicht.

6. Manueller Antrieb nach einem der vorhergehenden Ansprüche, **dadurch gekennzeichnet, dass** das Kraftübertragungsstück als feste Welle (10) ausgebildet ist, welche insbesondere in axialer Verlängerung der Antriebswelle (5) der Anhängerkupplung (1) oder einer dazu parallelen Achse angeordnet ist.

7. Manueller Antrieb nach einem der Ansprüche 1 bis 5, **dadurch gekennzeichnet, dass** das Kraftübertragungsstück als flexibles Element (17) ausgebildet ist, insbesondere als Seilzug.

8. Manueller Antrieb nach Anspruch 7, **dadurch gekennzeichnet, dass** das flexible Element (17) an der Handbetätigung (18) eine erste Trommel (21) und an der Anhängerkupplung (1) eine zweite Trommel (22) aufweist, zwischen denen ein Seil, insbesondere ein Stahlseil, gespannt ist.

9. Manueller Antrieb nach Anspruch 8, **dadurch gekennzeichnet, dass** das Seil an der ersten Trommel (21) festgelegt ist, durch eine Seilführung (20) zu der zweiten Trommel (22) verläuft und dort gehalten ist, und durch die Seilführung (20) wieder zurück zu der ersten Trommel (21) verläuft und dort eingespannt ist.

10. Manueller Antrieb nach Anspruch 8 oder 9, **dadurch gekennzeichnet, dass** die erste Trommel (21) und die zweite Trommel (22) einen unterschiedlichen Durchmesser aufweisen.

11. Manueller Antrieb nach einem der vorhergehenden Ansprüche, **dadurch gekennzeichnet, dass** die Handbetätigung (8, 18) um ganzzahlige Vielfache von 90°, insbesondere 180° oder 360°, verdrehbar ist.

12. Anhängerkupplung mit einem manuellen Antrieb (7, 16) für eine Anhängerkupplung (1), insbesondere nach einem der vorhergehenden Ansprüche, welche zwischen einer Ruhestellung und einer Betriebsstellung mit einer Handbetätigung (8, 18) verstellbar ist, wobei die Handbetätigung (8, 18) über ein Kraftübertragungsstück (10, 17) fest mit einer Antriebswelle (5) der Anhängerkupplung (1) verbunden ist und einen an dem Kraftübertragungsstück (10, 17) angreifenden Hebel (9, 19) aufweist, **dadurch gekennzeichnet, dass** die Handbetätigung (8, 18) eine Zwangsführung (15, 28) aufweist, welche eine Arretierung vorsieht, die nur in vorgegebenen Positionen des Hebels (9, 19) einrastbar ist, welche die Betriebs- und Ruhestellung der Anhängerkupplung entsprechen.

## Claims

1. A manual drive for a trailer coupling (1), in particular for a car, for moving the trailer coupling (1) between a resting position and an operating position using a manual control (8, 18), in which case the manual control (8, 18) can be firmly attached via a power-transmission component (10, 17) to a drive shaft (5) of the trailer coupling (1) and comprises a lever (9, 19) which acts on the power-transmission component (10, 17), **characterized in that** the manual control (8, 18) has a positive guide (15, 28) providing a locking mechanism which can only engage or catch in predetermined positions of the lever (9, 19) which correspond to the operating position and the resting position of the trailer coupling.

2. A manual drive according to Claim 1, **characterized in that** a gear (6) is provided between the power-transmission component (10, 17) and the drive shaft (5) of the trailer coupling (1).

3. A manual drive according to one of the preceding claims, **characterized in that** the locking mechanism is designed in such a way that it can only be operated using two hands owing to the fact that it has an additional catch (32).

4. A manual drive according to one of the preceding claims, **characterized in that** the lever (9) can be swivelled or swung out from the power-transmission component (10) and, if need be, has an additional hinged joint (13, 14).

5. A manual drive according to Claim 4, **characterized in that** the positive guide (15) allows the lever (9) to swivel in only in a predetermined position.

6. A manual drive according to one of the preceding claims, **characterized in that** the power-transmission component takes the form of a fixed shaft (10) which is disposed in particular in the axial extension of the drive shaft (5) of the trailer coupling (1) or of an axle parallel thereto.

7. A manual drive according to one of Claims 1 to 5, **characterized in that** the power-transmission component takes the form of a flexible element (17), in particular a cable line.

8. A manual drive according to Claim 7, **characterized in that** the flexible element (17) has a first drum (21) on the manual control (18) and a second drum (22) on the trailer coupling (1), between which there extends a cable, in particular a steel cable.

9. A manual drive according to Claim 8, **characterized in that** the cable is fixed to the first drum (21), runs through a cable guide (20) to the second drum (22) and is fixed thereto, before running back again through the cable guide (20) to the first drum (21) and being clamped there.

10. A manual drive according to Claim 8 or 9, **characterized in that** the first drum (21) and the second drum (22) have different diameters.

11. A manual drive according to one of the preceding claims, **characterized in that** the manual control (8, 18) can be turned through integral multiples of 90°, in particular 180° or 360°.

12. A trailer coupling having a manual drive (7, 16) for a trailer coupling (1), in particular according to one of the preceding claims, which can be moved between a resting position and an operating position using a manual control (8, 18), in which case the manual control (8, 18) is firmly attached via a power-transmission component (10, 17) to a drive shaft (5) of the trailer coupling (1) and comprises a lever (9, 19) which acts on the power-transmission component (10, 17), **characterized in that** the manual control (8, 18) has a positive guide (15, 28) providing a locking mechanism which can only engage or catch in predetermined positions of the lever (9, 19) which correspond to the operating position and the resting position of the trailer coupling.

## Revendications

1. Dispositif d'entraînement manuel pour un attelage de remorque (1), notamment pour un véhicule de tourisme, pour le déplacement de l'attelage de remorque (1) entre une position de repos et une position d'utilisation avec une commande à main (8, 18), la commande à main (8, 18) pouvant être reliée fermement à un arbre de commande (5) de l'attelage de remorque (1) à l'aide d'un élément de transmission de force (10, 17) et présentant un levier (9, 19) agissant sur l'élément de transmission de force (10, 17), **caractérisé en ce que** la commande à main (8, 18) est munie d'un guidage forcé (15, 28) qui prévoit un blocage qui ne peut s'encliqueter que dans des positions du levier (9, 19) prédéterminées, lesquelles correspondent à la position d'utilisation et à la position de repos de l'attelage de remorque.

2. Dispositif d'entraînement manuel selon la revendication 1, **caractérisé en ce qu'**un engrenage (6) est prévu entre l'élément de transmission de force (10, 17) et l'arbre de commande (5) de l'attelage de remorque (1).

3. Dispositif d'entraînement manuel selon l'une des revendications précédentes, **caractérisé en ce que** le blocage est conçu de telle sorte qu'il en peut être actionné qu'à l'aide des deux mains en présentant un verrouillage (32) supplémentaire.

4. Dispositif d'entraînement manuel selon l'une des revendications précédentes, **caractérisé en ce que** le levier (9) peut être déplié de l'élément de transmission de force (10) et présente le cas échéant une articulation de pliage supplémentaire.

5. Dispositif d'entraînement selon la revendication 4, **caractérisé en ce que** le guidage forcé (15) ne permet le repliage du levier (9) que dans une position prédéterminée.

6. Dispositif d'entraînement selon l'une des revendications précédentes, **caractérisé en ce que** l'élément de transmission de force est conçu sous la forme d'un arbre (10) rigide disposé notamment dans le prolongement axial de l'arbre de commande (5) de l'attelage de remorque (1) ou sur un axe parallèle à celui-ci.

7. Dispositif d'entraînement manuel selon l'une des revendications 1 à 5, **caractérisé en ce que** l'élément de transmission de force est conçu sous la forme d'un élément flexible (17), notamment sous la forme d'un câble.

8. Dispositif d'entraînement manuel selon la revendication 7, **caractérisé en ce que** l'élément flexible (17) présente au niveau de la commande à main (18) un premier tambour (21) et au niveau de l'attelage de remorque (1) un deuxième tambour (22), entre lesquels est tendu un câble, notamment un câble d'acier.

9. Dispositif d'entraînement manuel selon la revendication 8, **caractérisé en ce que** le câble est fixé sur le premier tambour (21), passe à travers un guide-câble (20) jusqu'au deuxième tambour (22) sur lequel il est retenu, et revient à travers le guide-câble (20) vers le premier tambour (21) où il est fixé.

10. Dispositif d'entraînement manuel selon la revendication 8 ou 9, **caractérisé en ce que** le premier tambour (21) et le deuxième tambour (22) ont des diamètres différents.

11. Dispositif d'entraînement manuel selon l'une des revendications précédentes, **caractérisé en ce que** la commande à main (8, 18) peut être tournée d'un multiple entier de 90°, notamment de 180° ou de 360°.

12. Attelage de remorque avec un dispositif d'entraînement manuel (7, 16) pour un attelage de remorque (1), notamment selon l'une des revendications précédentes, lequel peut être déplacé d'une position de repos dans une position d'utilisation à l'aide d'une commande à main (8, 18), la commande à main (8, 18) étant reliée fermement à un arbre de commande (5) de l'attelage de remorque (1) à l'aide d'un élément de transmission de force (10, 17) et présentant un levier (9, 19) agissant sur l'élément de transmission de force (10, 17), **caractérisé en ce que** la commande à main (8, 18) est munie d'un guidage forcé (15, 28) qui prévoit un blocage qui ne peut s'encliqueter que dans des positions du levier (9, 19) prédéterminées, lesquelles correspondent à la position d'utilisation et à la position de repos de l'attelage de remorque.
